# EUROPEAN PATENT SPECIFICATION

(11) **EP 1 810 576 B1**
(45) Date of publication and mention of the grant of the patent: **01.09.2010**
(21) Application number: 06394001.9
(22) Date of filing: 19.01.2006
(51) Int. Cl.: A23G 3/02, A23G 7/00, A23G 3/20, A23G 9/08, A23G 9/22, B65D 85/78, B65D 85/60, B65B 3/02

(54) **Apparatus for manufacturing a packaging assembly for a food product**
Vorrichtung zum Herstellen einer Gebindeverpackung für Lebensmittel
Appareil de mise en forme d'un ensemble d'emballage de produit alimentaire

(43) Date of publication of application: 25.07.2007
(73) Proprietor: Murphy, Michael Laurence, Fermoy Cork (IE)
(72) Inventor: Murphy, Michael Laurence, Fermoy Cork (IE)
(74) Representative: O'Connor, Michael Donal

(56) References cited:
- EP-A- 0 292 338
- WO-A-93/21087
- US-A- 1 888 178
- US-A- 2 663 269
- US-A- 3 354 601
- US-A- 4 002 773

## Description

This invention relates to an apparatus as claimed in the appended claims, for producing a food product comprising individual layered food portions, each formed in individual moulds. The present invention is particularly, although not exclusively, suited to the production of frozen food products.

Restaurants and other catering outlets often purchase pre-prepared food products, such as desserts, which must be manually divided into individual serving size portions by restaurant staff prior to being served to restaurant patrons.

However, the requirement for restaurant staff to manually divide up such food products into serving size portions is not desirable as it typically results in a lack of uniformity in terms of the serving size. Moreover, the presentation quality and aesthetics of the served food portions are usually unsatisfactory as the food product itself tends to degrade during portioning which is in any event a time consuming task for restaurant staff to perform. Additionally, as many pre-prepared food products available are sold as frozen products, or designed to be frozen for storage purposes, it is normally the case that the whole food product must be defrosted at one time, which generally requires that the whole food product must be fully consumed within a short period of time. In the event that the defrosted food product is not consumed within the required time limit the unconsumed portion must usually be discarded unsold which is costly to the restaurant. Moreover, if the product is to be sold as in individual frozen food portion to patrons then cutting the product into portions whilst frozen is extremely difficult and time consuming.

There exists a need in the catering industry for a food product which provides individual serving size food portions which are able to be efficiently served by catering staff to patrons. It is therefore an object of the present invention to go at least some way towards overcoming the above disadvantages and/or to provide the industry and/or public with a useful alternative.

European Patent Publication No. EP 0 292 338 discloses packaging for food products and in particular products having a solid or highly viscous texture. The container disclosed is in the form of a band with an optional base and lid. The closure means of the band are either assembly tabs which either co-operate with a slot, are stuck together or are disposed head-to-tail and co-operate with each other in a hook-like manner. The main drawback of these closure means is that although they may allow the container to remain securely closed, it is envisaged that the type of closure means could lead to distortion of the food product either during storage or removal from the container.

US 4, 002,773 discloses an apparatus for producing a food product of the type comprising portions formed in individual cups.

US 3, 354, 601 discloses an apparatus for producing food product portions formed in individual containers made from a web being shaped around a core by a former into a tubular configuration. A pair of grippers is mounted below the former for reciprocating movement toward and away from the core.

It is acknowledged that the term 'comprise', under varying jurisdictions may be provided with either an exclusive or inclusive meaning. For the purpose of this specification, and unless otherwise noted explicitly, the term comprise shall have an inclusive meaning - i.e. that it may be taken to mean an inclusion of not only the listed components it directly references, but also other non-specified components. Accordingly, the term 'comprise' is to be attributed with as broad an interpretation as possible within any given jurisdiction and this rationale should also be used when the terms 'comprised' and/or 'comprising' are used.

Further aspects of the present invention will become apparent from the ensuing description which is given by way of example only.

### Statements of invention

According to the invention there is provided an apparatus for producing a food product of the type comprising individual layered portions, each portion formed in an individual mould **characterised in that** the product comprises:
a tray having a plurality of shallow recesses each having a base and an upstanding side wall;
an upstanding tubular sleeve forming a portion sides embracing support mounted in each recess, each sleeve being separable into a removable blank.

The provision of such a food product will eliminate the requirement for catering staff to manually divide up a larger food product into individual serving sized portions. In order to serve the food product catering staff need only remove the tubular sleeve from around the food portion and place the portion on a plate for presentation to a customer. Such a provision will ensure that each portion served is of a high presentation quality and of a uniform size. Furthermore, the amount of time required by catering staff to serve each portion will be significantly reduced as a result of not having to manually divide up a larger food product into individual servings. In cases involving frozen food products there will also be significantly less wastage as catering staff may optionally defrost individual portions of the food product at one time, instead of an entire large food product as individual portions according to the present invention, may easily be taken off the tray.

In one embodiment of the invention the blank is rectangular having two long sides interconnected by two short sides which overlap and are releasably connected together to form the tubular sleeve.

Releasably connecting the short sides of the blank will facilitate the formation of a tubular sleeve which is separable into a blank able to be easily removed from around the food portion. Such a provision will enable each food portion to be easily releasable from its packaging without damage, thus resulting in ease of serving and minimal wastage.

In another embodiment of the invention the tubular sleeve is separable by a pull tab which extends outside the sleeve when formed.

The provision of a pull tab will enable catering staff to easily grip and separate the tubular sleeve into a removable blank.

In a further embodiment of the invention the overlapping short sides of the blank are releasably connected together by spot welds

According to a main aspect of the invention there is provided an apparatus for producing a food product of the type comprising individual layered food portions, each portion formed in an individual mould **characterised in that** the apparatus comprises a mould forming station and a mould filling station, the mould forming station comprising:
a blank dispenser having a plurality of rectangular blanks, each blank having two long sides interconnected by two short sides;
a tray dispenser having a plurality of trays, each tray having a plurality of shallow recesses formed therein;
a sealing chamber comprising:
   a channel having two spaced apart side walls and a base wall, the spacing between the side walls being less than the length dimension of the long side of the blanks;
   a cylindrical core positioned within the channel adjacent the base wall;
   a gripper to rotate the blank in the channel to form a U-shape having an open mouth facing the core and to push the U-shaped blank against the core so that the short sides of the blank slide against the base wall and overlap to embrace the core;
   securing means for releasably connecting the overlapping sides of the blank together to form a tubular sleeve;
   positioning means for placing the sleeve into a recess on the tray to form a mould;
   the mould filling station comprising:
      a filling dispenser having a dispensing head for dispensing a food portion into the tubular sleeve on the tray.

In another embodiment of the invention each tray is movable from the mould dispensing station to the mould filling station along a conveyor.

In a further embodiment of the invention the recess of each tray has a base and an upstanding side wall, the base having a diameter slightly larger than the diameter of the tubular sleeve.

In one embodiment of the invention the gripper leads a blank from the blank dispenser into the channel prior to rotating the blank to form a U-shape having an open mouth facing the core.

In another embodiment of the invention the gripper rotates the blank in the channel by 90 degrees.

In a further embodiment of the invention the securing means comprises elongate welding rods which engage through bore holes in the sealing chamber to spot weld the overlapping portions of the blank together.

In one embodiment of the invention the positioning means comprises a plurality of elongate pushing rods which engage through bore holes in the sealing chamber to remove the sleeve from around the core and into a recess on a tray.

### Detailed Description of the Invention

Further aspects of the present invention will become apparent from the ensuing description which is given by way of example only and with reference to the accompanying drawings in which:
Fig. 1 is a perspective view showing a food product according to the invention;
Fig. 2 is a perspective view showing an empty tray for use with the food product shown in Fig. 1;
Fig. 3 is a perspective view showing a food portion being removed from a sleeve prior to being served to a customer;
Fig. 4 is a perspective view of an apparatus used for producing the food product shown in Fig. 1;
Fig. 5 is a detailed perspective view showing a mould forming station;
Fig. 6 is a cross-sectional diagrammatic view of the apparatus illustrated in Fig. 5; and
Fig. 7 is a perspective view showing a tray of individual moulds produced by the mould dispensing station, and
Fig. 8 is a schematic showing the formation of a tubular sleeve from a blank.

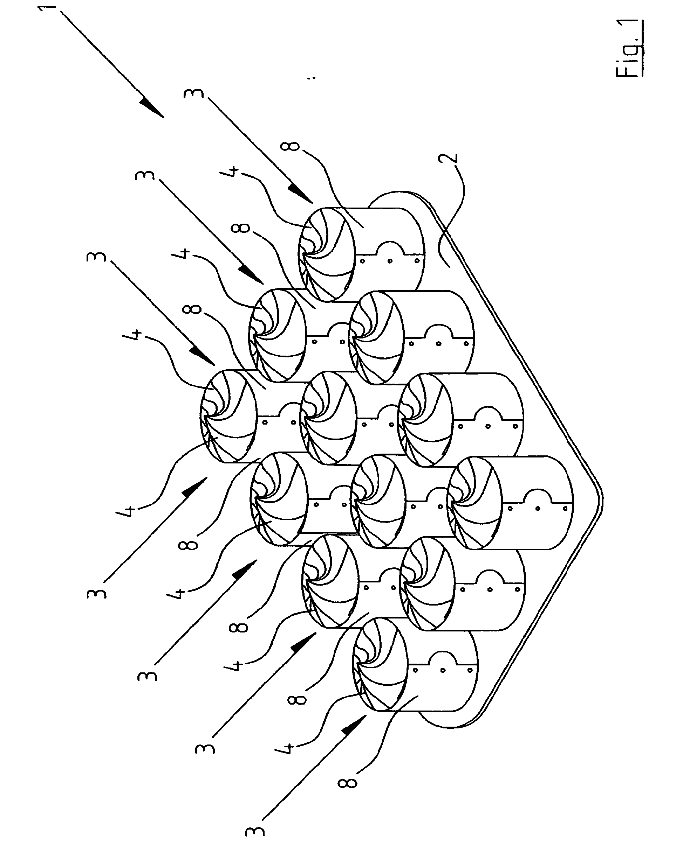

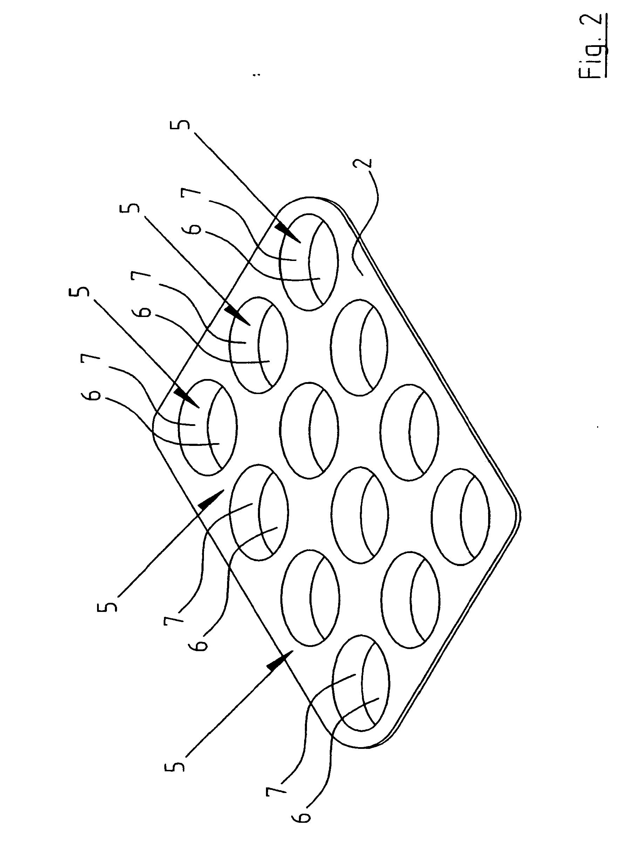

Referring to Fig. 1 there is shown a food product, indicated generally by the reference numeral 1 which comprises a tray 2 mounting a plurality of individual moulds, indicated generally by the reference numeral 3, each mould 3 containing a food portion 4. Referring to Fig. 2, each tray 2 comprises a plurality of shallow recesses, each generally indicated by the reference numeral 5, each having a base 6 and an upstanding side wall 7. Mounted in each recess 5, and referring back to Fig. 1, is an upstanding tubular sleeve 8 into which a food portion 4 is dispensed. Accordingly, each sleeve 8 forms the side walls of each mould 3 and a portion sides embracing support within which a food portion is retained, set and stored until it is to be consumed. It should be appreciated that for the purposes of this specification the term 'individual mould' should be taken to mean the combination of upstanding tubular sleeve 8 being located in a recess 5 on the tray 2.

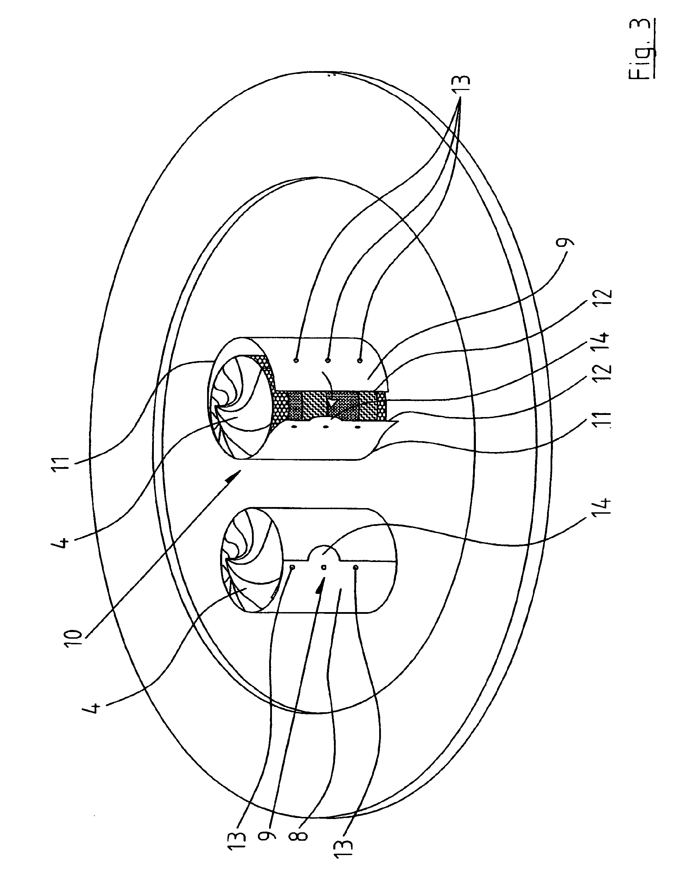

Fig. 3 shows a perspective view of the food portion 4 being removed from the tubular sleeve 8, with those parts similar to those described already identified by the same reference numerals. Each tubular sleeve 8 has a separating means, generally indicated by the reference numeral 9, which allow the sleeve to be separated into a removable blank, generally indicated by the reference numeral 10. The blank 10, when removed from around the food portion 4, is rectangular having two long sides 11 interconnected by two short sides 12 which overlap and are releasably connected together. In the instance shown, the separating means 9 comprises frangible welds 13, such as spot welds, which releasably connect the overlapping short sides 12 together to form the tubular sleeve 8. Also forming a part of the separating means 9 is a pull tab 14 which extends from one of the short sides 12 of the blank 10, and more specifically, from the short side 12 which extends outside the tubular sleeve 8 when formed.

To serve the food portion 4 catering staff need only remove the sleeve 8 containing the food portion 4 from a recess 5 in the tray 2 and apply a pulling force to the pull tab 14 which is sufficient to break the welds 13 to thereby separate the sleeve into a blank 10 which can be easily removed from around the food portion 4. Such a provision will also minimise the amount of handling of the food portion 4 which will in turn significantly increase the levels of hygiene associated with serving the food portion 4.

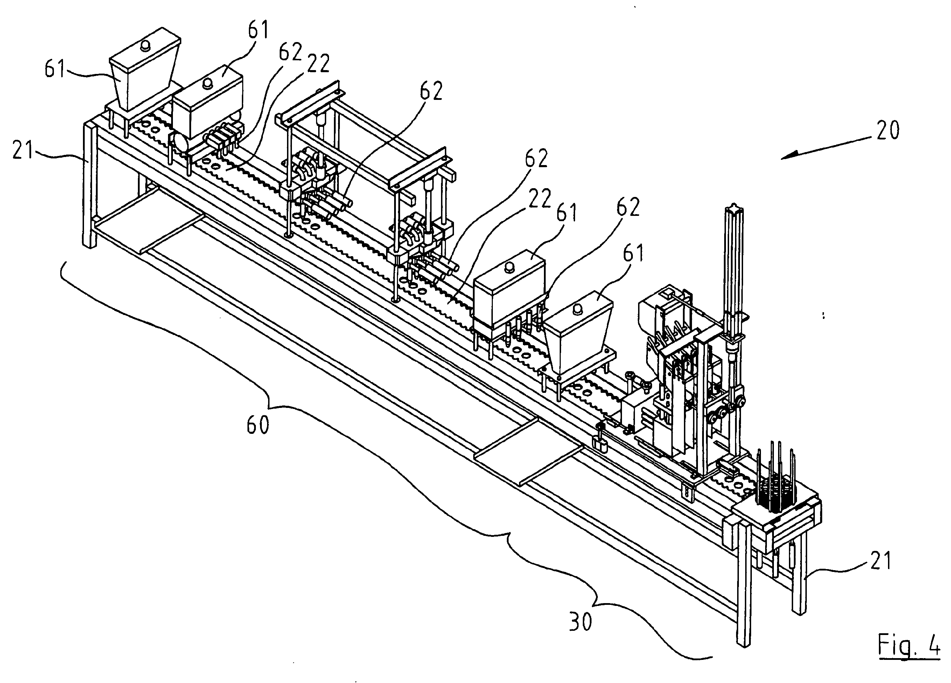

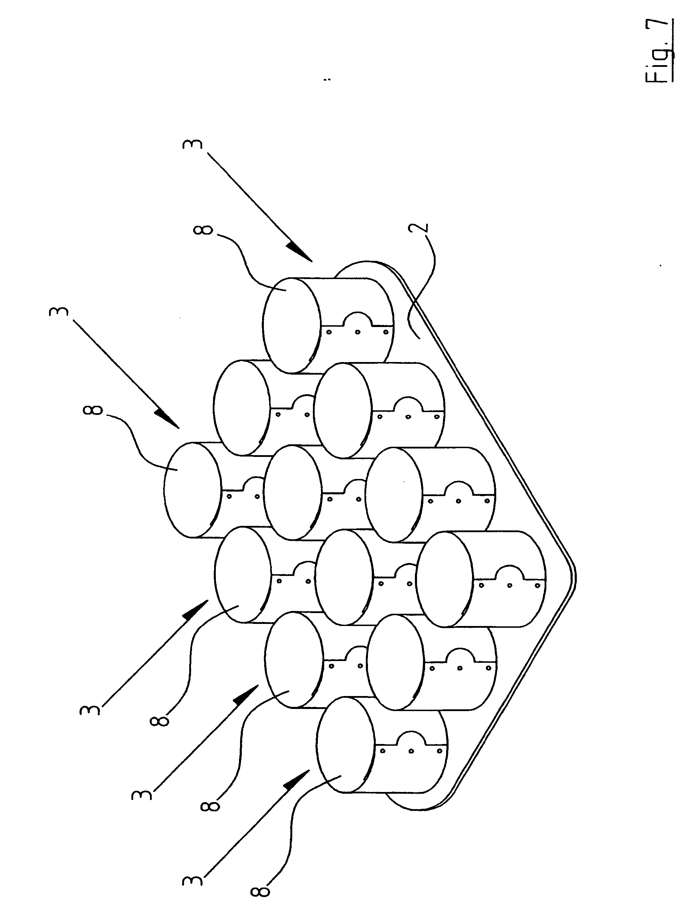

Fig. 4 illustrates an apparatus, indicated generally by the reference numeral 20, used to produce the food product 1 according to the invention, again like parts using the same numeral identification system of Figs. 1 to 3. The apparatus 20 comprises a mould forming station, generally indicated by the reference numeral 30, and a mould filling station, generally indicated by the reference numeral 60, which are mounted on a table 21 housing a conveyor 22. It should be understood that the mould forming station 30 essentially outputs moulds 3, namely trays 2 having a plurality of recesses 5 each mounting an upstanding tubular sleeve 8 to form a plurality of individual moulds, such moulds are shown in Fig. 7. It should also be appreciated that the mould filling station 60, subsequently dispenses a layered food portion into the open end of the tubular sleeves 8 to form the finished food product 1. The dispensing station 30 and the filling station 60 are interconnected by the conveyor 22 which when activated transports moulds 3 from the mould forming station 30 to the filling station 60.

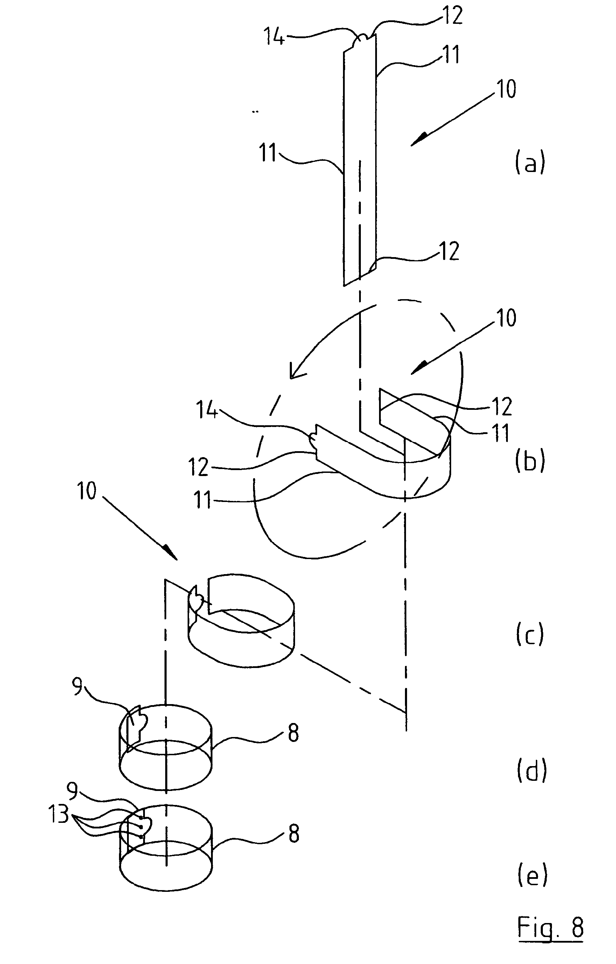

Referring briefly to Fig. 8, again with like parts using the same numeral identification system of Figs. 1 to 3, in summary the sleeve 8 is formed as follows. In step (a) a rectangular blank 10 is extracted from a plurality of blanks by a gripper. In step (b) the blank 10 is turned through ninety degrees within a guide channel to form a U-shaped blank having an open mouth which faces a core in a sealing chamber. In step (c) the open mouth of the U-shaped blank 10 is pushed toward the core of the sealing chamber such that the short sides 12 of the U-shaped blank 10 slide against a base wall of the sealing chamber so as to curve around the core. In step (d) the short sides 12 of the U-shaped blank 10 have overlapped to embrace the core. In step (e) elongate spot welding rods engage through bore holes in the sealing chamber to secure the overlapping portions of the blank together using spotwelds 13 to form a tubular sleeve 28 around the core which is then evacuated from the sealing chamber and into the recess of a tray waiting beneath the sealing chamber on the conveyor.

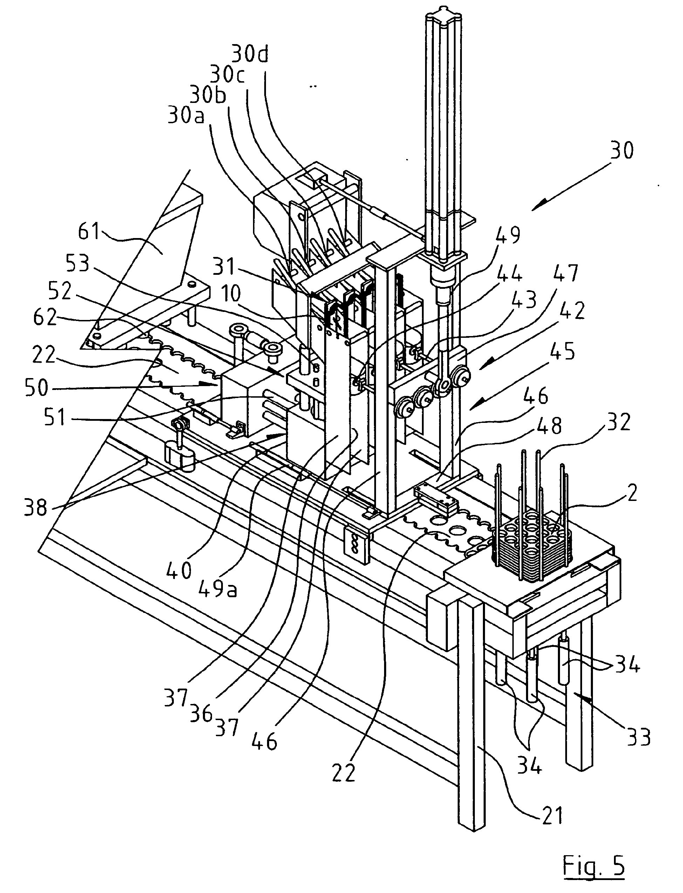

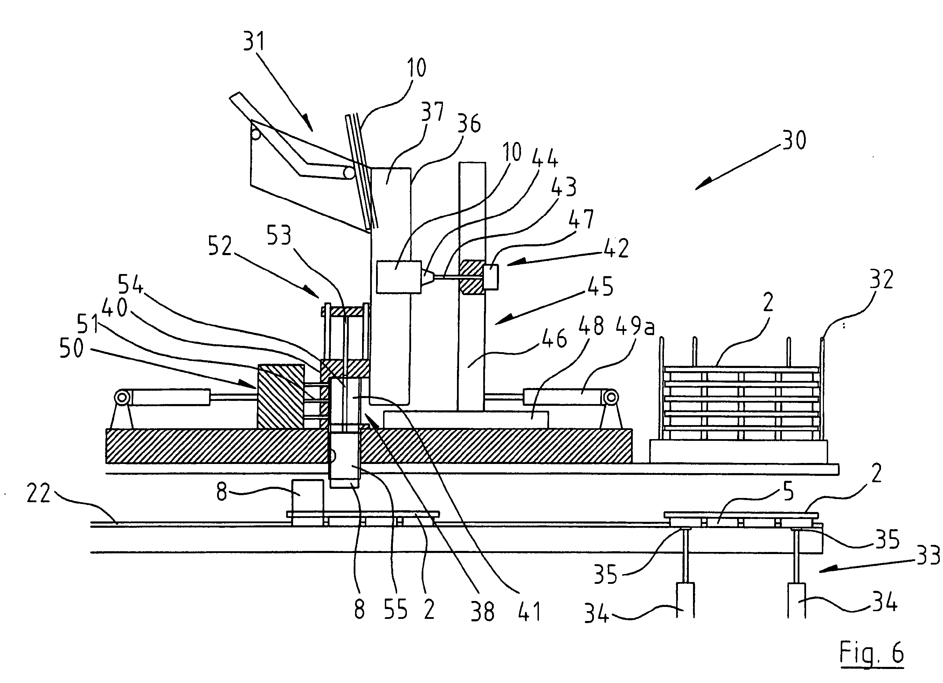

Referring to Figs. 5 and 6, again with like parts using the same numeral identification system of Figs. 1 to 3, the mould forming station used to form the sleeve will be described. Shown is a mould forming station 30 which comprises four adjacent sleeve formers, each generally indicated by the reference numerals 30(a)-(d). For ease of reference however, the operation of the mould forming station 30 will be described with reference to a single sleeve former 30a.

The mould forming station 30 comprises a blank dispenser 31 having a plurality of rectangular blanks 10, and a tray dispenser 32 having a plurality of trays 2.

A tray grip, indicated generally by the reference numeral 33, comprising a plurality of rams 34 carrying pneumatically operated suction cups 35 (see Fig. 6) which engage the bottom tray in the plurality of trays and places that tray 2 onto the conveyor 22.

Extending downwards from the blank dispenser 31 is a guide channel 36 comprising two spaced apart side walls 37 which extend backwards to form a sealing chamber, indicated generally by the reference numeral 38, having a base wall 40. Located within the sealing chamber 38 adjacent the base wall 40 is a cylindrical core 41 (see in particular Fig. 6).

The mould forming station 30 further comprises a gripper, generally indicated by the reference numeral 42, having a ram 43 carrying a pneumatically operated suction cup 44. In operation, the gripper 42 engages a blank 10 from the blank dispenser 31 and leads that blank 10 into the guide channel 36. The spacing between the two side walls 37 of the guide channel 36 is less than the length of the long side of the blank 10 so that when the suction cup 44 is rotated through 90 degrees within the channel 36 the blank 10 will form a U-shape within the channel 36 having its open mouth facing the core 41. In alternative embodiments of the invention however the blank 10 may not necessarily need to be rotated as it may be supplied from the blank dispenser 31 already in a U-shape configuration having an open mouth facing the sealing chamber 38.

Each gripper 42 is connected to a cross-bar 47 which slides up and down relative to the channel 36 and the sealing chamber 38 under the action of a ram 49. The cross-bar 47 is slideably mounted to a framework 45 between the uprights 46. The framework 45 is also slideably mounted on a base plate 48 so as to be moveable under the action of a ram 49a toward and away from the core 41. The movement of the framework 45 toward the core 41 will cause the short sides 12 of the U-shaped blank 10 to slide against the base wall 40 of the sealing chamber 38 so as to overlap and embrace the core 41.

Also shown is a securing means, generally indicated by the reference numeral 50, comprising elongate spot welding rods 51 for engaging through bore holes in the sealing chamber 38 to spot weld the overlapping portions of the blank 10 together to form a tubular sleeve 8 around the core 41.

Once the tubular sleeve 8 is formed a positioning means, generally indicated by the reference numeral 52, positions the tubular sleeve 8 into a recess 5 on a tray 2 located beneath the core sealing chamber 38. The positioning means 52 comprises a plurality of elongate pushing rods 53 which slideingly engage down complimentary rod receiving grooves 54 (see Fig. 6) located around the outer surface of the core 41. In operation, the pushing rods 53 engage through bore holes in the sealing chamber 38 and down the rod receiving grooves 54 so as to bear against the upward edge of the tubular sleeve 8 so as to push it from around the core 38 and out of the sealing chamber 38 via a chute 55 and onto a tray 2.

Once a sleeve 8 has been placed in each recess 5 on the tray 2 below it is moved by the conveyor 22 to the mould filling station 60.

Referring again to Fig. 4, the mould filling station 60 comprises a plurality of filling dispensers 61, each having at least one dispensing head 62 for outputting a food portion 4 into each mould 3 as the conveyor 22 moves each tray 2 under the various filling dispensers 61.

Aspects of the present invention have been described by way of example only and it should be appreciated that additions and/or modifications may be made thereto without departing from the scope thereof as defined in the appended claims.

## Claims

1. An apparatus (20) for producing a food product (1) of the type comprising individual layered food portions (4), each portion (4) formed in an individual mould (3), wherein the apparatus (20) comprises a mould forming station (30) and a mould filling station (60), the mould forming station (20) comprising:
a blank dispenser (31) having a plurality of rectangular blanks (10), each blank (10) having two long sides (11) interconnected by two short sides (12);
a tray dispenser (32) having a plurality of trays (2), each tray (2) having a plurality of shallow recesses (5) formed therein;
a sealing chamber (38) comprising:
a channel (36) having two spaced apart side walls (37) and a base wall (40), the spacing between the side walls (37) being less than the length dimension of the long side (11) of the blanks (10);
a cylindrical core (41) positioned within the channel (36) adjacent the base wall (40);
a gripper (42) to rotate the blank (10) in the channel (36) to form a U-shape having an open mouth facing the core (41) and to push the U-shaped blank (10) against the core (41) so that the short sides of the blank (10) slide against the base wall (40) and overlap to embrace the core (41);
seouring means (50) for releasably connecting the overlapping sides of the blank (10) together to form a tubular sleeve (8);
positioning means (52) for placing the sleeve (8) into a recess (5) on the tray (2) to form a mould (3);
the mould filling station (60) comprising:
a filling dispenser (61) having a dispensing head (62) for dispensing a food portion (4) into the tubular sleeve (8) on the tray (2).

2. An apparatus (20) as claimed in claim 1, in which each tray (2) is movable from the mould dispensing station (30) to the mould filling station (60) along a conveyor (22).

3. An apparatus (20) as claimed in claim 2, in which the recess (5) of each tray (2) has a base (6) and an upstanding side wall (7), the base (6) having a diameter slightly larger than the diameter of the tubular sleeve (8).

4. An apparatus (20) as claimed in claim 1 or claim 3, in which the gripper (42) is able to lead a blank (10) from the blank dispenser (31) into the channel (36) prior to rotating the blank (10) to form a U-shape having an open mouth facing the core (41).

5. An apparatus (20) as claimed in any of claims 1 to 4, in which the gripper (42) is able to rotate the blank (10) in the channel (36) by 90 degrees.

6. An apparatus (20) as claimed in any of claims 1 to 5, in which the securing means (50) comprises elongate welding rods (51) which engage through bore holes in the sealing chamber (38) to spot weld the overlapping portions of the blank (10) together.

7. An apparatus (20) as claimed in any of claims 1 to 6, in which the positioning means (52) comprises a plurality of elongate pushing rods (53) which engage through bore holes in the sealing chamber (38) to remove the sleeve (8) from around the core (41) and into a recess (5) on a tray (2).

## Patentansprüche

1. Vorrichtung (20) zum Herstellen eines Nahrungsmittelprodukts (1) des Typs, der einzelne geschichtete Nahrungsmittelportionen (4) aufweist, wobei jede Portion (4) in einer einzelnen Form (3) gebildet wird, und die Vorrichtung (20) eine Formbildungsstation (30) und eine Formfüllstation (60) aufweist, wobei die Formbildungsstation (20) Folgendes umfasst:
einen Rohstückausgeber (31) mit einer Mehrzahl rechteckiger Rohstücke (10), wobei jedes Rohstück (10) zwei lange Seiten (11) aufweist, die miteinander durch zwei kurze Seiten (12) verbunden sind;
einen Tablettausgeber (32) mit einer Mehrzahl von Tabletts (2), wobei jedes Tablett (2) eine Mehrzahl darin ausgebildeter flacher Aussparungen (5) aufweist;
eine Schweißkammer (38), die Folgendes umfasst:
einen Kanal (36) mit zwei voneinander beabstandeten Seitenwänden (37) und einer Bodenwand (40), wobei der Abstand zwischen den Seitenwänden (37) kleiner als die Längenabmessung der langen Seite (11) der Rohstücke (10) ist;
einen zylindrischen Kern (41), der innerhalb des Kanals (36) angrenzend an die Bodenwand (40) positioniert ist;
einen Greifer (42) zum Rotieren des Rohstücks (10) in dem Kanal (36), um eine U-Form mit einer zu dem Kern gerichteten (41) offenen Mündung zu bilden und das U-förmige Rohstück (10) gegen den Kern (41) zu schieben, so dass die kurzen Seiten des Rohstücks (10) gegen die Bodenwand (40) gleiten und sich zum Umschließen des Kerns (41) überlappen;
Befestigungsmittel (50) zum lösbaren Verbinden der sich überlappenden Seiten des Rohstücks (10) miteinander, um eine röhrenförmige Hülse (8) zu bilden;
Positionierungsmittel (52) zum Platzieren der Hülse (8) in einer Aussparung (5) auf dem Tablett (2) zum Bilden einer Form (3);
wobei die Formfüllstation (60) Folgendes umfasst:
einen Füllspender (61) mit einem Spenderkopf (62) zum Ausgeben einer Nahrungsmittelportion (4) in die röhrenförmige Hülse (8) auf dem Tablett (2).

2. Vorrichtung (20) nach Anspruch 1, bei der jedes Tablett (2) aus der Formausgabestation (30) entlang eines Förderbands (22) zu der Formfüllstation (60) bewegt werden kann.

3. Vorrichtung (20) nach Anspruch 2, bei der die Aussparung (5) jedes Tabletts (2) einen Boden (6) und eine hochstehende Seitenwand (7) aufweist, und der Boden (6) einen etwas größeren Durchmesser als der Durchmesser der röhrenförmigen Hülse (8) hat.

4. Vorrichtung (20) nach Anspruch 1 oder Anspruch 3, bei der der Greifer (42) ein Rohstück (10) von dem Rohstückausgeber (31) in den Kanal (36) führen kann, bevor das Rohstück (10) rotiert wird, um eine U-Form mit einer zu dem Kern (41) gerichteten offenen Mündung zu bilden.

5. Vorrichtung (20) nach einem der Ansprüche 1 bis 4, bei der der Greifer (42) das Rohstück (10) in dem Kanal (36) um 90 Grad rotieren kann.

6. Vorrichtung (20) nach einem der Ansprüche 1 bis 5, bei der das Befestigungsmittel (50) längliche Schweißstäbe (51) aufweist, die durch die Bohrlöcher in der Schweißkammer (38) eingreifen, um die sich überlappenden Teile des Rohstücks durch Punktschweißen miteinander zu verschweißen.

7. Vorrichtung (20) nach einem der Ansprüche 1 bis 6, bei der das Positioniermittel (52) eine Mehrzahl länglicher Schubstangen (53) aufweist, die durch die Bohrlöcher in der Schweißkammer (38) eingreifen, um die Hülse (8) aus ihrer Umschließung des Kerns (41) und in eine Aussparung (5) auf einem Tablett (2) zu entfernen.

## Revendications

1. Appareil (20) permettant de confectionner un produit alimentaire (1) du type comportant des portions alimentaires multicouches individuelles (4), chaque portion (4) étant formée dans un moule individuel (3), dans lequel l'appareil (20) comporte un poste de formage de moules (30) et un poste de remplissage de moules (60), le poste de formage de moules (20) comportant :
un distributeur de flans (31) ayant une pluralité de flans rectangulaires (10), chaque flan (10) ayant deux côtés longs (11) interconnectés par deux côtés courts (12) ;
un distributeur de plateaux (32) ayant une pluralité de plateaux (2), chaque plateau (2) ayant une pluralité d'évidements peu profonds (5) formés dans celui-ci ;
une chambre de scellage (38) comportant :
un profilé (36) ayant deux parois latérales espacées (37) et une paroi de base (40), l'espace entre les parois latérales (37) étant inférieur à la dimension de longueur du côté long (11) des flans (10) ;
une partie centrale cylindrique (41) positionnée à l'intérieur du profilé (36) de manière adjacente à la paroi de base (40) ;
un organe de préhension (42) destiné à faire tourner le flan (10) dans le profilé (36) pour former une forme en U ayant une embouchure ouverte orientée vers la partie centrale (41) et à pousser le flan en U (10) contre la partie centrale (41) de sorte que les côtés courts du flan (10) glissent contre la paroi de base (4) et se chevauchent pour encercler la partie centrale (41) ;
un moyen d'assujettissement (5) destiné à relier ensemble par raccordement libérable les côtés se chevauchant du flan (10) pour former un manchon tubulaire (8) ;
un moyen de positionnement (52) destiné à placer le manchon (8) dans un évidement (5) sur le plateau (2) pour former un moule (3) ;
le poste de remplissage de moules (60) comportant :
un distributeur de remplissage (61) ayant une tête de distribution (62) destinée à distribuer une portion alimentaire (4) dans le manchon tubulaire (8) sur le plateau (2).

2. Appareil (20) selon la revendication 1, dans lequel chaque plateau (2) est mobile du poste de distribution de moules (30) au poste de remplissage de moules (60) le long d'un transporteur (22).

3. Appareil (20) selon la revendication 2, dans lequel l'évidement (5) de chaque plateau (2) a une base (6) et une paroi latérale verticale (7), la base (6) ayant un diamètre légèrement supérieur au diamètre du manchon tubulaire (8).

4. Appareil (20) selon la revendication 1 ou la revendication 3, dans lequel l'organe de préhension (42) est en mesure de mener un flan (10) du distributeur de flans (31) dans le profilé (36) avant de faire tourner le flan (10) pour former une forme en U ayant une embouchure ouverte orientée vers la partie centrale (41).

5. Appareil (20) selon l'une quelconque des revendications 1 à 4, dans lequel l'organe de préhension (42) est en mesure de faire tourner le flan (10) dans le profilé (36) sur 90 degrés.

6. Appareil (20) selon l'une quelconque des revendications 1 à 5, dans lequel le moyen d'assujettissement (50) comporte des baguettes de soudure allongées (51) qui viennent s'insérer au travers de trous d'alésage dans la chambre de scellage (38) pour relier ensemble par soudage par points les parties se chevauchant du flan (10).

7. Appareil (20) selon l'une quelconque des revendications 1 à 6, dans lequel le moyen de positionnement (52) comporte une pluralité de tiges de poussée allongées (53) qui viennent s'insérer au travers de trous d'alésage dans la chambre de scellage (38) pour retirer le manchon (8) d'autour de la partie centrale (41) et dans un évidement (5) sur un plateau (2).
